# EUROPEAN PATENT SPECIFICATION

(11) **EP 3 620 294 B1**
(45) Date of publication and mention of the grant of the patent: **05.04.2023**
(21) Application number: 19194814.0
(22) Date of filing: 02.09.2019
(51) Int. Cl.: B29C 65/18, B65B 7/02, B65B 51/14, B29K 101/12

(54) **SEALING APPARATUS AND BAGGING AND PACKAGING MACHINE**
SIEGELVORRICHTUNG SOWIE BEUTEL-VERPACKUNGSMASCHINE
APPAREIL DE SCELLAGE ET MACHINE D'ENSACHAGE ET D'EMBALLAGE

(30) Priority: 05.09.2018 JP 2018166285
(43) Date of publication of application: 11.03.2020
(73) Proprietor: Toyo Jidoki Co., Ltd., Tokyo 108-0014 (JP)
(72) Inventor: MIZOTE, Kiyokazu, Iwakuni-shi, Yamaguchi (JP)
(74) Representative: Grünecker Patent- und Rechtsanwälte PartG mbB

(56) References cited:
- JP-U- H 061 210
- US-A- 3 830 681
- US-A1- 2017 043 893

## Description

### Field of the Invention

The present invention relates to a sealing apparatus and a bagging and packaging machine.

### Background Art

A bagging and packaging machine including a transport mechanism configured to transport a pouch along a predetermined track, and a plurality of processing units that process a pouch transported by the transport mechanism has been conventionally known. The bagging and packaging machine includes, for example, an empty-pouch supply unit, a mouth opening unit, a filling unit, a sealing unit and a discharge unit, which are arranged in this order along the predetermined track. In the bagging and packaging machine, an empty pouch is supplied by the empty pouch supply unit, a pouch mouth of the pouch is opened in the mouth opening unit, the pouch is filled with an article (object to be packaged) in the filling unit, the pouch mouth of the pouch is sealed by the sealing unit, and the pouch is discharged in the discharge unit to the outside of the machine.

In the sealing unit, for example, a pouch mouth of a pouch is interposed between a pair of clamping members configured to be move close to each other and away from each other, and at least one of the clamping members is heated so that a layer (inner layer) positioned inside the pouch interposed between the pair of clamping members is partially melted whereby the pouch mouth is sealed. At this time, there is a possibility that the melted inner layer leaks from the pouch mouth to adhere to the clamping member, and that the inner layer gets burned on the surface of the clamping member. In this case, a foreign matter made of the burned inner layer may adhere to an outer surface of the pouch to be sealed, which impairs a visual appearance of the pouch. Thus, in order to prevent that a melted inner layer adheres to the clamping member, an antifouling sheet having heat resistance, such as a Teflon^{®} sheet, has been conventionally positioned between the clamping member and the pouch.

From US 2017/043893 A1, a sealing bar for a vacuum drawer for vacuuming food is known. The sealing bar has a two-part design, with a base body and a frame part which is equipped with a Teflon tape. This two-part design allows for a replacement of the Teflon tape. Either the total frame part or only the Teflon tape can be replaced. A welding wire extends in the longitudinal direction on the surface of the base body. If the frame part is placed onto the base body from above, the welding wire is disposed directly below the Teflon tape, whereby an ideal heat transfer is produced.

US 3 830 681 A concerns a sealing head, comprising a flat and relatively non-resilient gripping jaw, and a convex resilient gripping jaw. At the bottom edge of the flat gripping jaw, an elongate plate is clamped by screws against the closed fold of a two layer Teflon-impregnated glass cloth sheet used to prevent adherence to a heated thermoplastic web. Sandwiched between the two layers of the sheet, and thereby electrically insulated, is a flat nichrome resistance heating ribbon which is only periodically electrically energized to effect impulse sealing.

JP H06-1210 U discloses an impulse heater for automatic packaging machine in which a thermoplastic film pouch is interposed between a pair of opening and closing plates one of which has a heating element, and the heating element is heated to seal the film pouch. A heating wire is fixed to one of the opening and closing plates. Above the opening and closing plate, a sheet holder having an L-shape section to which an upper end of a Teflon sheet is attached is fixed to a sheet attachment base by means of an attachment bolt. Thus, the Teflon sheet hanging the sheet holder covers the heating wire with a space between the Teflon sheet and the heating wire. When a film pouch filled with a filler is transported between the pair of opening and closing plates, one or both of the opening and closing plates move to interpose therebetween the film pouch on both sides thereof. Under this state, the heating wire is powered so that the heating wire generates heat. The heat is transmitted to the film pouch through the Teflon sheet, whereby the film pouch is heat-sealed. In such an impulse heater, since the Teflon sheet is hung so as to cover the heating wire, even when the heating wire is repeatedly powered, the Teflon sheet flexibly expands and contracts. Thus, since heat of the Teflon sheet is efficiently released from both sides, the film pouch can be advantageously sealed well without the Teflon sheet being wrinkled.

An antifouling sheet can prevent adhesion of a foreign matter to a some extent. However, when a foreign matter excessively or repeatedly adheres thereto, there is a possibility that the foreign matter remains on the surface of the antifouling sheet, and that the foreign matter adheres to an outer surface of a pouch. Thus, it is necessary to replace the antifouling sheets on a regular basis. In the technique disclosed in JPH06-1210U, the Teflon sheet is fixed to the opening and closing plate by means of an attachment bolt. Thus, when replacing the Teflon sheets, a tool for loosening and fastening the attachment bolt is necessary. Namely, replacement of the Teflon sheets disadvantageously requires labor and time.

### Summary of the Invention

The present invention has been made in view of the above circumstances. The object of the present invention is facilitate replacement of antifouling sheets in a sealing apparatus.

A sealing apparatus according to the present invention comprises a heating plate having a sealing surface that heat-seals a pouch mouth of a pouch, and an antifouling-sheet attachment mechanism to which an antifouling sheet for covering the sealing surface is attached;
wherein the antifouling-sheet attachment mechanism comprises:
an accommodation member having a groove part; and
an insertion member having a longitudinal direction that is parallel to a direction in which the groove part extends, at least a part of the insertion member being inserted into the groove part; and
wherein the antifouling sheet is held between the groove par and the insertion member.

In the sealing apparatus according to the present invention, the accommodation member may have a holding part that prevents falling down of the insertion member form the groove part.

In the sealing apparatus according to the present invention, the accommodation member may have a part to be attached that is attached to another member included in the sealing apparatus.

In the sealing apparatus according to the present invention,
the accommodation member may have a part to be attached that is attached to another member included in the sealing apparatus, and
the holding part may have a cutout or a through-hole corresponding to the part to be attached.

In the sealing apparatus according to the present invention, the part to be attached may have a hole communicated with the groove part.

In the sealing apparatus according to the present invention, the hole may be a through-hole.

In the sealing apparatus according to the present invention, the accommodation member may have a restriction part that restricts movement of the insertion member in a direction crossing the direction in which the groove part extends.

In the sealing apparatus according to the present invention, the accommodation member may have a handle part that can be gripped by an operator.

A bagging and packaging machine according to the present invention comprises the aforementioned sealing apparatus.

According to the present invention, the antifouling sheets can be easily replaced in the sealing apparatus.

### Brief Description of the Drawings

Fig. 1 is a view for describing an embodiment of the present invention, which is a perspective view showing a general structure of a bagging and packaging machine in which a sealing apparatus is incorporated.
Fig. 2 is a perspective view showing a part of the sealing apparatus.
Fig. 3 is a view in section showing a part of the sealing apparatus of Fig. 2.
Fig. 4 is a perspective view separately showing a heating plate of the sealing apparatus and an antifouling-sheet attachment mechanism.
Fig. 5 is a perspective view showing the antifouling-sheet attachment mechanism seen from below.
Fig. 6A is a perspective view showing an accommodation member of the antifouling-sheet attachment mechanism seen from above.
Fig. 6B is a perspective view showing the accommodation member of Fig. 6A seen from below.
Fig. 7A is a perspective view showing an insertion member of the antifouling-sheet attachment mechanism seen from above.
Fig. 7B is a perspective view showing the insertion member of Fig. 7A seen from below.
Fig. 8A is a perspective view of an antifouling sheet to be attached to the antifouling-sheet attachment mechanism seen from above.
Fig. 8B is a perspective view of the antifouling sheet of Fig. 8A seen from below.
Fig. 9 is a view for describing an attachment method of the antifouling sheet to the antifouling-sheet attachment mechanism.

### Detailed Description of the Invention

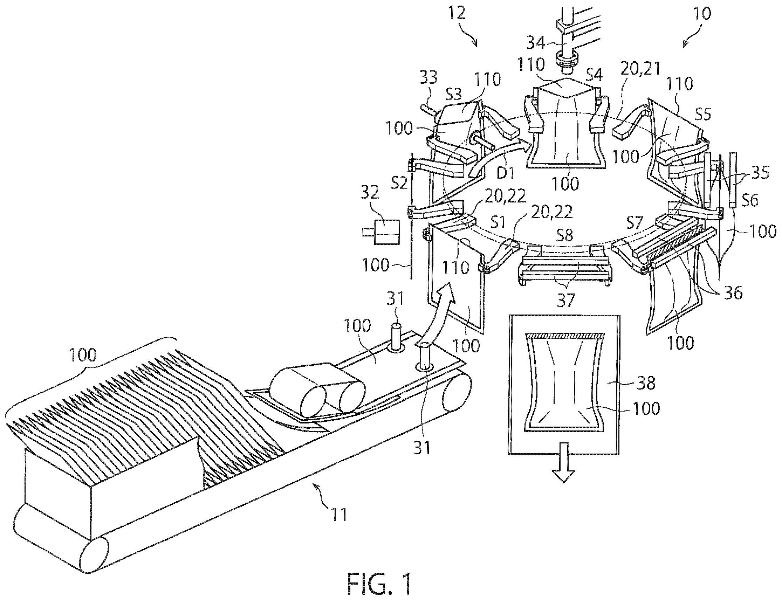

Herebelow, an embodiment of the present invention is described with reference to the drawings. Figs. 1 to 9 are views for describing an embodiment of the present invention. Fig. 1 is a perspective view showing a general structure of a bagging and packaging machine 10 in which sealing apparatuses 35, 36 are incorporated. In Fig. 1, illustration of a below-described antifouling-sheet attachment mechanism 50 is omitted.

A bagging and packaging machine 10 comprises a conveyor magazine 11 and a pouch processing apparatus 12. A plurality of pouches 100 are stored in a stacked manner in the conveyor magazine 11. Each pouch 100 stored in the conveyor magazine 11 is an empty pouch. A pouch mouth 110 is closed, with opposed sidewalls forming the pouch mouth 110 being in contact with each other. The pouches 100 stored in the conveyor magazine 11 are held one by one by means of a pouch taking-out unit 31 formed of an adhesive disc, and are delivered from the pouch taking-out unit 31 to respective holding units 22 of the pouch processing apparatus 12.

The pouch processing apparatus 12 comprises: a transport mechanism 20 that transports a pouch 100 in a standing posture, along a predetermined track; and a plurality of processing units (in the example shown in Fig. 1, a first station S1 to an eighth station S8) that process a pouch 100 transported by the transport mechanism 20. The transport mechanism 20 comprises: a transport table 21 that is intermittently rotated about an axis; and a plurality of holding units 22 each for holding a pouch 100, the holding units 22 being mounted equidistantly on an outer circumferential part of the transport table 21. In Fig. 1, the transport table 21 is shown by two-dot chain lines in order to facilitate understanding of other structures. Each holding unit 22 includes a pair of right and left gripping units 23a, 23b. Side parts of each pouch 100, which are positioned opposite to each other through a pouch mouth 110, are respectively held by the gripping units 23a, 23b. The pouch 100 is held and transported by the holding unit 22, such that the pouch 100 takes a standing posture. Particularly in the illustrated example, each pouch 100 is held and transported in a suspended state by the holding unit 22. The "standing posture" herein means a posture of the pouch 100 in which the sidewall parts forming the pouch 100 extend substantially along the vertical direction. Each holding unit 22 is intermittently moved along a transport direction (rotation direction) D1 together with the transport table 21, and is intermittently stopped at the first station S1 to the eighth station S8. Namely, the pouch 100 is repeatedly moved and stopped along the predetermined track so as to be transported. The number of holding units 22 corresponds to the number of stations S1 to S8. Thus, the bagging and packaging machine 10 of Fig. 1 is equipped with the eight holding units 22.

In the first station (empty-pouch supply unit) S1, a pouch 100 is delivered by the pouch taking-out unit 31 from the conveyor magazine 12 to the holding unit 22 (empty-bag supplying step). In the second station (printing unit) S2, a production date, an expiration date and so on are printed on a surface of the pouch 100 by a printing apparatus 32 (printing step). In the third station (mouth opening unit) S3, the pouch mouth 110 of the pouch 100 is opened by a mouth opening means 33 (mouth opening step). In the fourth station (filling unit) S4, a discharge outlet of a filling apparatus 34 is located inside the pouch 100 through the pouch mouth 110, and an object to be packaged 200 is filled into the pouch 100 from the filling apparatus 34 (filling step). In the fifth station (mouth closing unit) S5, a distance between the holding unit 22 is expanded to close the pouch mouth 110 (mouth closing step). In the sixth station (first pouch-mouth sealing unit) S6, the pouch mouth 110 of the pouch 100 is heat-sealed by a first sealing apparatus 35 (first pouch-mouth sealing step). In the seventh station (second pouch-mouth sealing unit) S7, the pouch mouth 110 of the pouch 100 is heat-sealed by a second sealing apparatus 36 (second pouch-mouth sealing step). In the eighth station (cooling unit) S8, the heat-sealed pouch mouth 110 of the pouch 100 is cooled by a cooling apparatus 37 (sealed-portion cooling step), and the pouch 100 is released from the gripping by the holding unit 22 to fall down to a discharge chute 38. The pouch 100 having fallen down to the discharge chute 38 is guided by the discharge chute 38 so as to be sent to a succeeding stage.

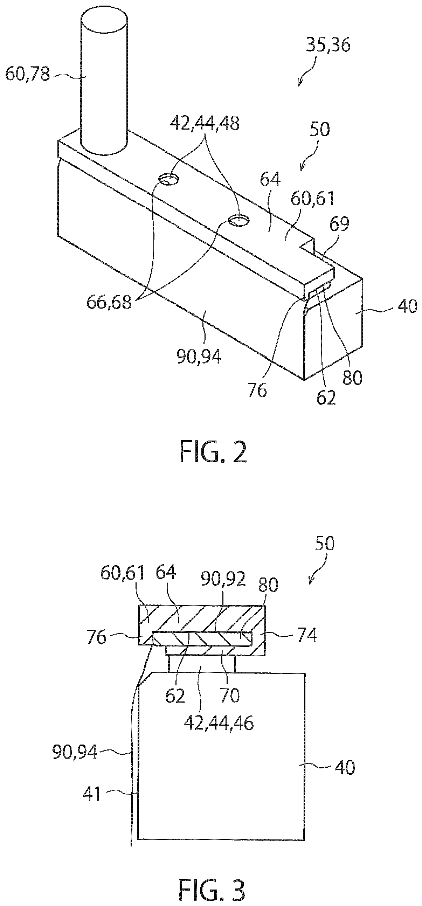

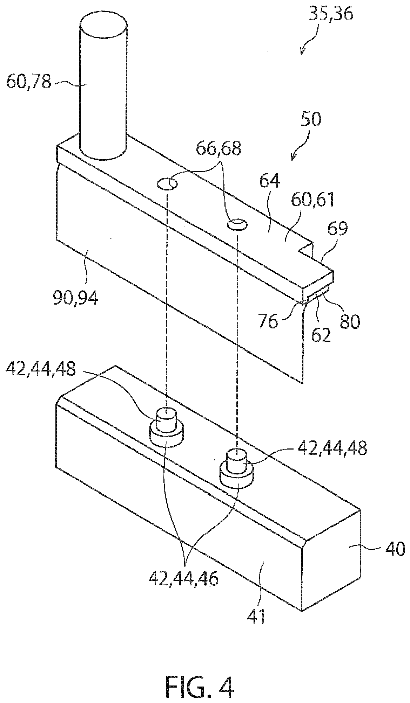

Next, the sealing apparatus 35, 36 is described with reference to Figs. 2 to 4. Fig. 2 is a perspective view showing a part of the sealing apparatus 35, 36. Fig. 3 is a view in section showing a part of the sealing apparatus 35, 36. Fig. 4 is a perspective view separately showing a heating plate 40 of the sealing apparatus 35, 36 and an antifouling-sheet attachment mechanism 50. In Fig. 3, only the antifouling-sheet attachment mechanism 50 of the sealing apparatus 35, 36 is shown in section.

The sealing apparatuses 35, 36 are disposed away from each other in a radial direction of the transport table 21. Each sealing apparatus 35, 36 comprises a pair of heating plates 40 facing to each other, and the antifouling-sheet attachment mechanism 50 disposed correspondingly to each heating plate 40.

A not-shown heating mechanism is disposed inside the heating plate 40. For example, an electrically heated wire that is powered to generate heat can be used as the heating mechanism, for example. In the sealing apparatus 35, 36, by interposing a mouth pouch 110 of a pouch 100 between the pair of heating plates 40 heated by the heating mechanism, a part of the pouch 100 in the pouch mouth 110, e.g., a layer (inner layer) positioned inside the pouch is melted so as to seal the pouch mouth 110. Thus, the heating plate 40 has a sealing surface that heat-seals a pouch mouth 110 of a pouch 100. The respective sealing surfaces 41 of the pair of heating plates 40 are surfaces that interpose therebetween a pouch mouth 110 of a pouch 100, and are disposed to face each other. Particularly in the sealing apparatus in this embodiment, the pair of heating plates 40 interpose therebetween a pouch mouth 110 through antifouling sheets 90 each of which is attached to the antifouling-sheet attachment mechanism 50 for covering the sealing surface 41.

The antifouling sheet 90 is a member that prevents that a part of the pouch 100, which is melted upon sealing of the pouch mouth 100, leaks from the pouch mouth 110 so as to adhere to the heating plate 40. The antifouling sheet 90 is attached to the antifouling-sheet attachment mechanism 50. When the antifouling-sheet attachment mechanism 50 is attached to the heating plate 40, the antifouling sheet 90 is positioned with respect to the heating plate 40 so as to cover the sealing surface 41 of the heating plate 40. The antifouling sheet 90 is not specifically limited, and a sheet-like (film-like) member having heat resistance and antifouling property can be used. For example, a sheet made of PTFE (polytetrafluoroethylene) can be used as the antifouling sheet 90, for example.

The heating plate 40 is a linear member having a longitudinal direction. The longitudinal direction of the heating plate 40 is parallel to the transport direction D1 of a pouch 100 in the pouch processing apparatus 12. A section of the heating plate 40, which is orthogonal to the longitudinal direction thereof, has a substantially rectangular profile. When a pouch mouth 110 of a pouch 100 is sealed, the sealing surface 41 is pressed onto the pouch mouth 110 through the antifouling sheet 90. In addition, the antifouling-sheet attachment mechanism 50 is attached to another surface (upper surface in illustrated example) of a plurality of longitudinally-extending surfaces of the heating plate 40.

As shown in Fig. 4, an attachment part 42 for attaching the antifouling-sheet attachment mechanism 50 to the heating plate 40 is disposed on a surface of the heating plate 40, which faces the antifouling-sheet attachment mechanism 50. The attachment part 42 includes a plurality of projections 44. In the illustrated example, the attachment part 42 includes two projections 44 that are arranged side by side with a space therebetween along the longitudinal direction of the heating plate 40. Each projection 44 has a larger diameter part 46 positioned closer to a body part of the heating plate 40, and a smaller diameter part 48 positioned away from the body part of the heating plate 40 with respect to the larger diameter part 46, i.e., positioned oppositely to the body part of the heating plate 40 with respect to the larger diameter part 46. Both the larger diameter part 46 and the smaller diameter part 48 have a substantially columnar shape. A diameter of the larger diameter part 46 is larger than a diameter of the smaller diameter part 48. A central axis of the larger diameter part 46 coincides with a central axis of the smaller diameter part 48. According to such a projection 44, by setting sizes of a below-described through-holes 68, 82 of the antifouling-sheet attachment mechanism 50 and a size of a through-hole 98 of the antifouling sheet 90 to be larger than a size of the smaller diameter part 48 and to be smaller than a size of the larger diameter part 46, when the antifouling-sheet attachment mechanism 50 is attached to the heating plate 40, the antifouling-sheet attachment mechanism 50 can be attached to be spaced apart from the heating plate 40 by a height size of the larger diameter part 46. Thus, heat transmitted from the heating plate 40 to the antifouling-sheet attachment mechanism 50 can be reduced, whereby increase in temperature of the antifouling-sheet attachment mechanism 50 can be effectively suppressed.

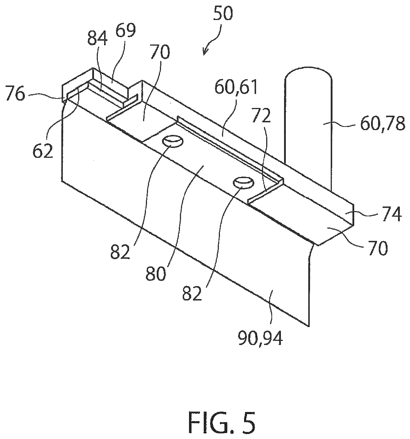

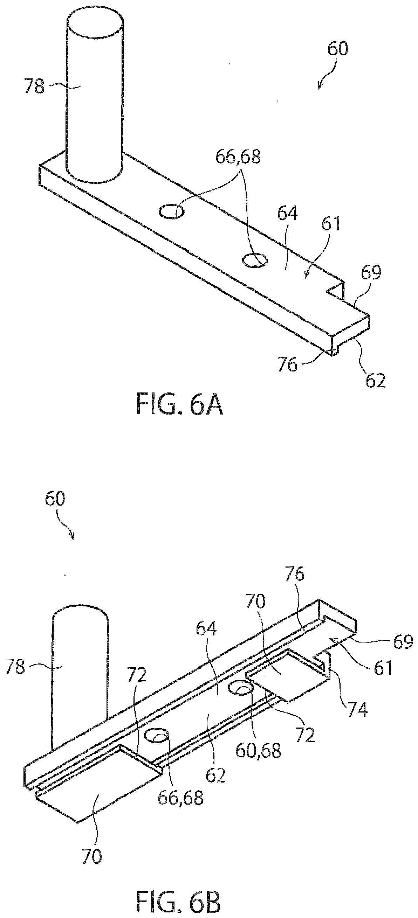

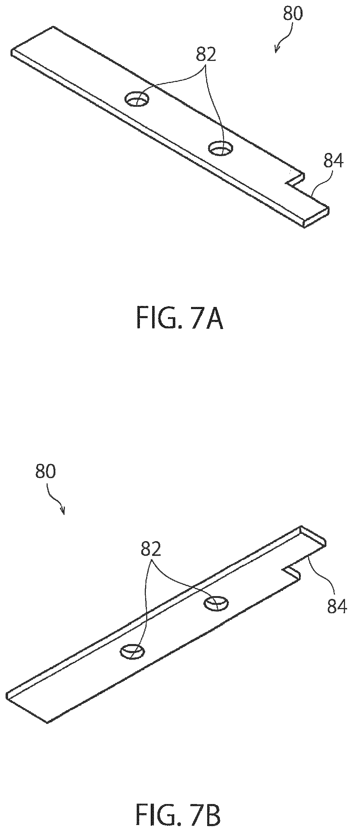

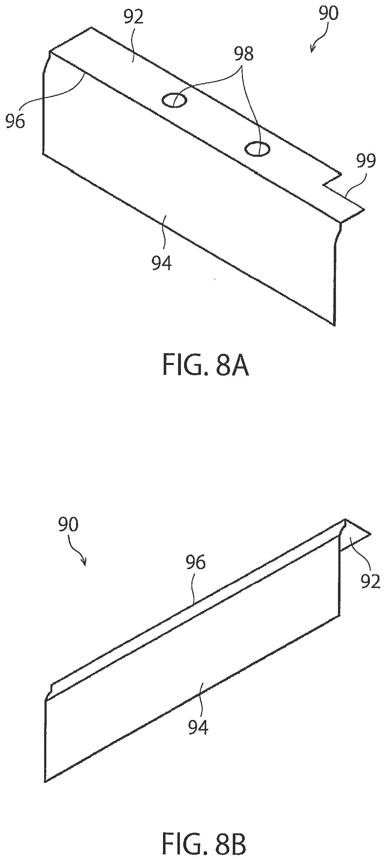

Next, the antifouling-sheet attachment mechanism 50 is described with reference to Figs. 4 to 8B. Fig. 5 is a perspective view showing the antifouling-sheet attachment mechanism 50 seen from below. Fig. 6A is a perspective view showing an accommodation member 60 of the antifouling-sheet attachment mechanism 50 seen from above. Fig. 6B is a perspective view showing the accommodation member 60 seen from below. Fig. 7A is a perspective view showing an insertion member 80 of the antifouling-sheet attachment mechanism 50 seen from above. Fig. 7B is a perspective view showing the insertion member 80 of Fig. 7A seen from below. Fig. 8A is a perspective view of an antifouling sheet 90 attached to the antifouling-sheet attachment mechanism 50 seen from above. Fig. 8B is a perspective view of the antifouling sheet 90 seen from below.

The antifouling-sheet attachment mechanism 50 comprises an accommodation member 60 and an insertion member 80 inserted inside the accommodation member 60. The accommodation member 60 has a longitudinal direction. The accommodation member 60 has a groove part 62 that extends linearly along the longitudinal direction. At least a part of the insertion member 80 is disposed in the groove part 62. In the illustrated example, the antifouling sheet 90 is interposed to be held between the groove part 62 of the accommodation member 60 and the insertion member 80 inserted inside the accommodation member 60.

The accommodation member 60 comprises a body part 61 and a handle part 78 attached to the body part 61. The body part 61 comprises a flat plate-like base part 64, a holding part 70 facing the base part 64 with a space between the holding part 70 and the base part 64, a connection part 74 that connects the base part 64 and the holding part 70, and a restriction part 76 formed to extend from the base part 64 so as to restrict movement of the insertion member 80.

The base part 64 is a flat plate-like part having a longitudinal direction. The base part 64 is provided with a part to be attached 66 that is attached to a member included in the sealing apparatus 35, 36, e.g., the heating plate 40. In the illustrated example, by attaching the part to be attached 66 of the base part 64 to the attachment part 42 of the heating plate 40, the antifouling-sheet attachment mechanism 50 is attached to the heating plate 40. However, not limited thereto, the part to be attached 66 may be attached to a member included in the sealing apparatus 35, 36, other than the heating plate 40. The part to be attached 66 includes a plurality of holes 68 communicated with the groove part 62. In the illustrated example, the part to be attached 66 includes two holes 68 that are arranged side by side with a space therebetween along the longitudinal direction of the base part 64. The number of the holes 68 and their positions correspond to the number of the projections 44 of the heating page 40 and their positions. The hole 68 may be either a through-hole or a blind hole. In the illustrated example, the hole 68 is formed of a through-hole. In accordance therewith, the hole 68 is referred to also as through-hole 68 in this specification. The hole 68 has a circular profile in a plan view, i.e., seen from a direction normal to a plate plane of the base part 64. A size (diameter) of the hole 68 is larger than the size (diameter) of the smaller diameter part 48 of the projection 44 of the heating plate 40, and is smaller than the size (diameter) of the larger diameter part 46. From the viewpoint of preventing displacement between the antifouling-sheet attachment mechanism 50 and the heating plate 40 attached thereto, a difference between the size of the hole 68 and the size of the smaller diameter part 48 is preferably small. The base part 64 has a cutout 69 in a corner thereof. The cutout 64 is disposed such that the base part 64 is not in contact with a wiring extending from the upper surface of the heating plate 40. The wiring is a wiring for powering the heating mechanism disposed inside the heating plate 40, for example.

The holding part 70 is a member that prevents falling down of the insertion member 80 from the groove part 62. The holding part 70 is disposed to face the base part 64 with a space between the holding part 70 and the base part 64. Thus, the holding part 70 at least partly covers the groove part 62. The holding part 70 is formed to have a flat plate-like shape. A plate plane of the holding part 70 is parallel to the plate plane of the base part 64. The holding part 70 is provided with a cutout or a through-hole corresponding to the part to be attached 66 of the base part 64. The cutout or the through-hole is disposed such that the projection 44 of the heating plate 40, which is to be attached to the part to be attached 66 of the base part 64, can pass therethrough. Thus, the cutout or the through-hole is disposed to include an area that is overlapped with the part to be attached 66 (hole 68) along the direction normal to the plate plane of the base part 64 (plate plane of holding part 70). At this time, the one cutout or the one through-hole may either be disposed to include an area overlapped with one hole 68 included in the part to be attached 66, or be disposed to include a plurality of areas overlapped with the respective holes 68 included in the part to be attached 66. In addition, the one cutout or the one through-hole may be disposed to include all the area overlapped with the respective holes 68 included in the part to be attached 66. In the example shown in Figs. 5 and 6B, the holding part 70 is provided with a cutout 72 corresponding to the part to be attached 66. The cutout 72 is disposed to include an area overlapped with the two holes 68 of the part to be attached 66.

The connection part 74 is a member that connects the base part 64 and the holding part 70. In the illustrated example, the connection part 74 extends from the base part 64 parallel to the direction normal to the plate plane of the base part 64. Thus, the connection part 74 extends in the direction perpendicular to the plate planes of the base part 64 and the holding part 70. The connection part 74 is disposed at least correspondingly to a part where the holding part 70 is disposed.

The restriction part 76 is a member that restricts movement of the insertion member 80 in a direction crossing the direction (longitudinal direction) in which the groove part 62 extends, in particular, in a direction orthogonal to the direction in which the groove part 62 extends. More specifically, the restriction part 76 restricts the movement of the insertion member 80 in the direction orthogonal to the direction in which the groove part 62 extends, and in the direction that is parallel to the plate plane of the base part 64. Thus, the insertion member 80 inserted in the accommodation member 60 can be stably held. In the illustrated example, the restriction part 76 extends from the base part 64 parallel to the direction normal to the plate plane of the base part 64. Thus, the restriction part 76 extends in the direction perpendicular to the plate plane of the base part 64. The restriction part 76 extends in the longitudinal direction of the base part 64 over all the length of the base part 64. However, not limited thereto, the restriction part 76 may be disposed partly along the longitudinal direction of the base part 64. In the antifouling-sheet attachment mechanism 50 in this embodiment, the movement of the insertion member 80 inserted in the accommodation member 60 in the direction orthogonal to the direction in which the groove part 62 extends and in the direction that is parallel to the plate plane of the base part 64 can be restricted by the connection part 74 and the restriction part 76.

In the illustrated example, the groove part 62 is formed by a space surrounded by the base part 64, the connection part 74 and the restriction part 76. A section of the groove part 62, which is orthogonal to the longitudinal direction of the body part 61, has a substantially rectangular profile. In addition, the groove part 62 has the same sectional shape along the longitudinal direction of the body part 61. Thus, the insertion member 80 can be inserted into the groove part 62 along the longitudinal direction of the body part 61.

A material constituting the body part 61 is not specifically limited as long as it has heat resistance. For example, a metal material such as a stainless material, or a resin material such as PTFE can be used as a material constituting the body part 61. When the body part 61 is formed of a metal material, the base part 64, the connection part 74 and the restriction part 76 may be firstly formed of an integral member, and then the holding part 70 formed to have a plate-like shape may be connected to the connection part 74 by welding or the like.

The handle part 78 is a part which is gripped by an operator for handling the antifouling-sheet attachment mechanism 50, when the antifouling-sheet attachment mechanism 50 is attached to or detached from the heating plate 40. The handle part 78 is fixed to the base part 64 of the body part 61 by a fastening means such as a bolt. A material constituting the handle part 78 may be different from a material constituting the body part 61. In consideration that the handle part 78 is gripped by an operator, the handle part 78 is preferably formed of a material having a low heat transfer coefficient. For example, the body part 61 may be formed of a metal material, while the handle part 78 may be formed of a resin material or a rubber material.

Next, the insertion member 80 is described with reference to Figs. 7A and 7B. The insertion member 80 is a member at least a part of which is disposed in the groove part 62 of the accommodation member 60 so as to hold the antifouling sheet 90 that is interposed between the groove part 62 and the insertion member 80 (between the base part 64 of the accommodation member 60 and the insertion member 80). The insertion member 80 in this embodiment has a longitudinal direction, and is formed to have a flat plate shape as a whole. When the insertion member 80 is disposed in the groove part 62, the longitudinal direction of the insertion member 80 is parallel to the direction in which the groove part extends. A section of the insertion member 80, which is orthogonal to the longitudinal direction thereof, has a substantially rectangular profile. In addition, the insertion member 80 has the same sectional shape along its longitudinal direction. Thus, the insertion member 80 can be inserted along this longitudinal direction into the groove part 62 of the accommodation member 60.

The insertion member 80 is provided with through-holes 82 at positions corresponding to the holes 68 of the base part 64, when the insertion member 80 is inserted in the groove part 62 of the accommodation member 60. Each through-hole 82 has a circular profile in a plan view, i.e., seen from a direction normal to a plate plane of the insertion member 80. A size (diameter) of the through-hole 82 is larger than the size (diameter) of the smaller diameter part 48 of the projection 44 of the heating plate 40, and is smaller than the size (diameter) of the larger diameter part 46. The insertion member 80 has a cutout 84 in a corner thereof corresponding to the cutout 69 of the accommodation member 60. Similarly to the cutout 69, the cutout 84 is disposed such that the insertion member 80 is not in contact with a wring extending from the upper surface of the heating plate 40.

Next, the antifouling sheet 90 is described with reference to Figs. 8A and 8B. The antifouling sheet 90 has a part to be held 92 that is held between the groove part 62 of the accommodation member 60 and the insertion member 80, and a hanging part 94 hanging from the part to be held 92. The part to be held 92 and the hanging part 94 are structured as an integral member. In the illustrated example, a fold line 96 is formed between the part to be held 92 and the hanging pat 94. However, the antifouling sheet 90 may not necessarily have the fold line 96. In a state where the antifouling-sheet attachment mechanism 50 is attached to the heating plate 40, the hanging part 94 of the antifouling sheet 90 is disposed to cover the sealing surface 41, and is positioned between the heating plate 40 (sealing surface 41) and a pouch mouth 110 of a pouch 100.

As shown in Fig. 8A, the part to be held 92 is provided with through-holes 98 at positions corresponding to the holes 68 of the base part 64 and the through-holes 82 of the insertion member 80, when the part to be held 92 is held between the groove part 62 of the accommodation member 60 and the insertion member 80. Each through-hole 98 has a circular profile in a plan view of the part to be held 92. A size (diameter) of the through-hole 98 is larger than the size (diameter) of the smaller diameter part 48 of the heating plate 40, and is smaller than the size (diameter) of the larger diameter part 46. In addition, the part to be held 92 has a cutout 99 in a corner thereof corresponding to the cutout 69 of the accommodation member 60. Similarly to the cutouts 69, 84, the cutout 99 is disposed such that the antifouling sheet 90 is not in contact with a wiring extending from the upper surface of the heating plate 40.

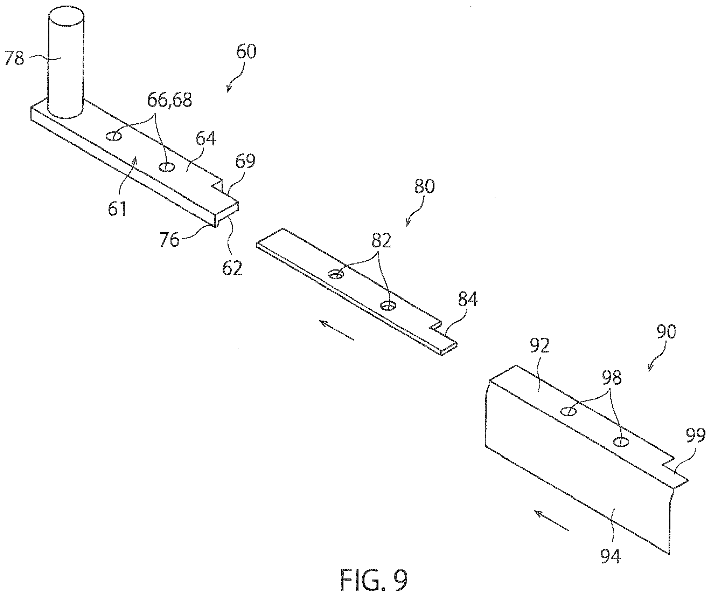

Next, an attachment method of the antifouling sheet 90 to the antifouling-sheet attachment mechanism 50 is described with reference to Fig. 9. Firstly, the part to be held 92 of the antifouling sheet 90 is overlapped with the insertion member 80 such that the part to be held 92 is positioned on the insertion member 80. Under this state, the direction in which the groove part 62 of the accommodation member 60 and the longitudinal direction of the insertion member 80 are coincident to each other, and the part to be held 92 and the insertion member 80 are inserted into the groove part 62 of the accommodation member 60 along the direction in which the groove part 62 extend (longitudinal direction of insertion member 80). Thus, the antifouling sheet 90 is held between the groove part 62 and the insertion member 80, namely, between the base part 64 of the accommodation member 60 and the insertion member 80. At this time, the positions of the through-holes 68 of the accommodation member 60, the through-holes 98 of the part to be held 92 of the antifouling sheet 90, and the through-holes 82 of the insertion member 80 are coincident to one another. In a case where the fold line 96 is not formed in the antifouling sheet 90, when the part to be held 92 of the antifouling sheet 90 and the insertion member 80 are inserted into the groove part 62, a fold line 96 is formed in the antifouling sheet 90 at a corner of the groove part 62 where the base part 64 and the restriction part 76 are connected to each other. When the fouling sheet 90 is detached from the antifouling-sheet attachment mechanism 50, the insertion member 80 and the antifouling sheet 90 are pulled out from the accommodation member 60.

In this embodiment, when the antifouling sheet 90 is attached to or detached from the antifouling-sheet attachment mechanism 50, it is not necessary to use a component such as an attachment bolt. That is to say, it is not necessary to use a tool such as a driver for loosing or fastening an attachment bolt. Thus, attachment/detachment of the antifouling sheet 90 to/from the antifouling-sheet attachment mechanism 50 can be easily performed in a short period of time.

When the antifouling-sheet attachment mechanism 50 to which the antifouling sheet 90 is attached is attached to the heating plate 40, an operator places the antifouling-sheet attachment mechanism 50 on the heating plate 40, while gripping the handle part 78 of the accommodation member 60, such that the smaller diameter part 48 of the projection 44 of the heating plate 40 passes sequentially through the cutout 72, the through-hole 82 and the through-hole 98 so as to be inserted through the through-hole 68 of the base part 64 of the accommodation member 60.

The sealing apparatus 35, 36 of the present invention comprises the heating plate 40 having the sealing surface 41 that heat-seals a pouch mouth 110 of a pouch 100, and the antifouling-sheet attachment mechanism 50 to which the antifouling sheet 90 for covering the sealing surface 41 is attached, wherein the antifouling-sheet attachment mechanism 50 comprises: the accommodation member 60 having the groove part 62; and the insertion member 80 having a longitudinal direction that is parallel to the direction in which the groove part 62 extends, at least a part of the insertion member 80 being positioned in the groove part; and wherein the antifouling sheet 90 is held between the groove part 62 and the insertion member 80.

The bagging and packaging machine 10 of the present invention comprises the aforementioned sealing apparatus 35, 36.

According to the sealing apparatus 35, 36 and the bagging and packaging machine 10, when the antifouling sheet 90 is attached to or detached from the antifouling-sheet attachment mechanism 50, it is not necessary to use a component such as an attachment bolt. That is to say, it is not necessary to use a tool such as a driver for loosing or fastening an attachment bolt. Thus, attachment/detachment of the antifouling sheet 90 to/from the antifouling-sheet attachment mechanism 50 can be easily performed in a short period of time. Namely, the antifouling sheets 90 can be easily replaced in the sealing apparatus 35, 36.

In the sealing apparatus 35, 36 of the present invention, the accommodation member 60 has the holding part 70 that prevents falling down of the insertion member 80 from the groove part 62.

According to such a sealing apparatus 35, 36, since falling down of the insertion member 80 from the groove part 62 can be prevented, the insertion member 80 and the antifouling sheet 90 can be stably held.

In the sealing apparatus 35, 36 of the present invention, the accommodation member 60 has the part to be attached 66 that is attached to another member included in the sealing apparatus 35, 36.

According to such a sealing apparatus 35, 36, the antifouling-sheet attachment mechanism 50 can be stably attached to another member, such as the heating plate 40, included in the sealing apparatus 35, 36.

In the sealing apparatus 35, 36 of the present invention, the holding part 70 has the cutout or the through-hole corresponding to the part to be attached 66.

According to such a sealing apparatus 35, 36, the holding part 70 can prevent that attachment of the antifouling-sheet attachment mechanism 50 to another member, such as the heating plate 40, included in the sealing apparatus 35, 36, is disturbed.

In the sealing apparatus 35, 36 of the present invention, the part to be attached 66 has the hole 68 communicated with the groove part 62.

In the sealing apparatus 35, 36 of the present invention, the hole 68 is the through-hole 68.

According to such a sealing apparatus 35, 36, the part to be attached 66 can be formed as a simple hole (through-hole) 68, so that the part to be attached 66 can be formed by an easy step.

In the sealing apparatus 35, 36 of the present invention, the accommodation member 60 has the restriction part 76 that restricts movement of the insertion member 80 in the direction crossing the direction in which the groove part 62 extends.

According to such a sealing apparatus 35, 36, the insertion member 80 inserted in the accommodation member 60 can be stably held.

In the sealing apparatus 35, 36 of the present invention, the accommodation member 60 has the handle part 78 that can be gripped by an operator.

According to such a sealing apparatus 35, 36, an operator can manually attach/detach the antifouling-sheet attachment mechanism 50 to/from the heating plate 40, without directly touching the body part 61 of the accommodation member 60, which may have a high temperature because of heat transmitted thereto from the heating plate 40. As a result, safety in attachment/detachment of the antifouling-sheet attachment mechanism 50 to/from the heating plate 40 can be improved.

The antifouling-sheet attachment mechanism 50 may either be attached to both the first sealing apparatus 35 and the second sealing apparatus 36, or be attached to only one of the first sealing apparatus 35 and the second sealing apparatus 36.

## Claims

1. A sealing apparatus (35, 36) comprising a heating plate (40) having a sealing surface (41) that heat-seals a pouch mouth (110) of a pouch (100), and an antifouling-sheet attachment mechanism (50) to which an antifouling sheet (90) for covering the sealing surface (41) is attached,
**characterized in that**
the antifouling-sheet attachment mechanism (50) comprises:
an accommodation member (60) having a groove part (62); and
an insertion member (80) having a longitudinal direction that is parallel to a direction in which the groove part (62) extends, at least a part of the insertion member (80)
being inserted into the groove part (62), and
the antifouling sheet (90) is held between the groove part (62) and the insertion member (80).

2. The sealing apparatus (35, 36) according to claim 1, wherein
the accommodation member (60) has a holding part (70) that prevents falling down of the insertion member (80) from the groove part (62).

3. The sealing apparatus (35, 36) according to claim 1 or 2, wherein
the accommodation member (60) has a part to be attached (66) that is attached to another member included in the sealing apparatus (35, 36).

4. The sealing apparatus (35, 36) according to claim 2, wherein
the accommodation member (60) has a part to be attached (66) that is attached to another member included in the sealing apparatus (35, 36), and
the holding part (70) has a cutout (72) or a through-hole corresponding to the part to be attached (66).

5. The sealing apparatus (35, 36) according to claim 3 or 4, wherein
the part to be attached (66) has a hole (68) communicated with the groove part (62).

6. The sealing apparatus (35, 36) according to claim 5, wherein
the hole (68) is a through-hole.

7. The sealing apparatus (35, 36) according to any of claims 1 to 6, wherein
the accommodation member (60) has a restriction part (76) that restricts movement of
the insertion member (80) in a direction crossing the direction in which the groove part (62) extends.

8. The sealing apparatus (35, 36) according to any of claims 1 to 7, wherein
the accommodation member (60) has a handle part (78) that can be gripped by an operator.

9. A bagging and packaging machine (10) comprising the sealing apparatus (35, 36) according to any of claims 1 to 8.

## Patentansprüche

1. Versiegelungsvorrichtung (35, 36), umfassend eine Heizplatte (40) mit einer Versiegelungsfläche (41), die eine Beutelöffnung (110) eines Beutels (100) heißversiegelt, und einen Mechanismus (50) zur Anbringung einer fäulnisverhindernden Folie, an dem eine fäulnisverhindernde Folie (90) zum Abdecken der Versiegelungsfläche (41) angebracht ist,
**dadurch gekennzeichnet, dass**
der Mechanismus zur Anbringung der fäulnisverhindernden Folie (50) umfasst:
ein Aufnahmeelement (60) mit einem Nutteil (62); und
ein Einführelement (80) mit einer Längsrichtung, die parallel zu einer Richtung verläuft, in der sich der Nutteil (62) erstreckt, wobei zumindest ein Teil des Einführelements (80) in den Nutteil (62) eingeführt ist, und
die fäulnisverhindernde Folie (90) zwischen dem Nutteil (62) und dem Einführelement (80) gehalten ist.

2. Versiegelungsvorrichtung (35, 36) nach Anspruch 1, wobei
das Aufnahmeelement (60) einen Halteteil (70) hat, der verhindert, dass das Einführelement (80) aus dem Nutteil (62) herausfällt.

3. Versiegelungsvorrichtung (35, 36) nach Anspruch 1 oder 2, wobei das Aufnahmeelement (60) einen anzubringenden Teil (66) hat, der an einem anderen Element der Versiegelungsvorrichtung (35, 36) angebracht ist.

4. Versiegelungsvorrichtung (35, 36) nach Anspruch 2, wobei
das Aufnahmeelement (60) einen anzubringenden Teil (66) hat, der an einem anderen Element der Versiegelungsvorrichtung (35, 36) angebracht ist, und
der Halteteil (70) einen Ausschnitt (72) oder eine Durchgangsbohrung hat, der oder die dem anzubringenden Teil (66) entspricht.

5. Versiegelungsvorrichtung (35, 36) nach Anspruch 3 oder 4, wobei der anzubringende Teil (66) eine Bohrung (68) hat, die mit dem Nutteil (62) in Verbindung steht.

6. Versiegelungsvorrichtung (35, 36) nach Anspruch 5, wobei
die Bohrung (68) eine Durchgangsbohrung ist.

7. Versiegelungsvorrichtung (35, 36) nach einem der Ansprüche 1 bis 6, wobei das Aufnahmeelement (60) einen Begrenzungsteil (76) hat, der die Bewegung des Einführelements (80) in einer Richtung begrenzt, die die Richtung kreuzt, in der sich der Nutteil (62) erstreckt.

8. Versiegelungsvorrichtung (35, 36) nach einem der Ansprüche 1 bis 7, wobei das Aufnahmeelement (60) einen Griffteil (78) hat, der von einem Bediener ergriffen werden kann.

9. Abfüll- und Verpackungsmaschine (10) mit der Versiegelungsvorrichtung (35, 36) nach einem der Ansprüche 1 bis 8.

## Revendications

1. Appareil de scellage (35, 36) comprenant une plaque chauffante (40) ayant une surface de scellage (41) qui thermoscelle une ouverture de sac (110) d'un sac (100), et un mécanisme de fixation de feuille antisalissures (50) auquel une feuille antisalissures (90) pour couvrir la surface de scellage (41) est fixée, **caractérisé en ce que**
le mécanisme de fixation de feuille antisalissures (50) comprend :
un élément de réception (60) ayant une partie rainure (62) ; et
un élément d'insertion (80) ayant une direction longitudinale qui est parallèle à une direction dans laquelle la partie rainure (62) s'étend, au moins une partie de l'élément d'insertion (80) étant insérée dans la partie rainure (62), et
la feuille antisalissures (90) est retenue entre la partie rainure (62) et l'élément d'insertion (80).

2. Appareil de scellage (35, 36) selon la revendication 1, dans lequel
l'élément de réception (60) a une partie de retenue (70) qui empêche l'élément d'insertion (80) de tomber de la partie rainure (62).

3. Appareil de scellage (35, 36) selon la revendication 1 ou 2, dans lequel
l'élément de réception (60) a une partie devant être fixée (66) qui est fixée à un autre élément compris dans l'appareil de scellage (35, 36).

4. Appareil de scellage (35, 36) selon la revendication 2, dans lequel
l'élément de réception (60) a une partie devant être fixée (66) qui est fixée à un autre élément compris dans l'appareil de scellage (35, 36), et
la partie de retenue (70) a une découpe (72) ou un trou traversant correspondant à la partie devant être fixée (66).

5. Appareil de scellage (35, 36) selon la revendication 3 ou 4, dans lequel
la partie devant être fixée (66) a un trou (68) qui communique avec la partie rainure (62).

6. Appareil de scellage (35, 36) selon la revendication 5, dans lequel
le trou (68) est un trou traversant.

7. Appareil de scellage (35, 36) selon l'une quelconque des revendications 1 à 6, dans lequel
l'élément de réception (60) a une partie de limitation (76) qui limite un déplacement de l'élément d'insertion (80) dans une direction croisant la direction dans laquelle la partie rainure (62) s'étend.

8. Appareil de scellage (35, 36) selon l'une quelconque des revendications 1 à 7, dans lequel
l'élément de réception (60) a une partie poignée (78) qui peut être saisie par un opérateur.

9. Machine d'ensachage et d'emballage (10) comprenant l'appareil de scellage (35, 36) selon l'une quelconque des revendications 1 à 8.
